# EUROPÄISCHE PATENTANMELDUNG

(11) **EP 2 677 461 A1**
(43) Veröffentlichungstag der Anmeldung: **25.12.2013**
(21) Anmeldenummer: 13002345.0
(22) Anmeldetag: 02.05.2013
(51) Int. Cl.: G06K 9/00, G01C 21/36, G08G 1/0962, G06F 17/28

(54) **Informationseinrichtung**

(30) Priorität: 20.06.2012 DE 102012012269
(71) Anmelder: AUDI AG, 85045 Ingolstadt (DE)
(72) Erfinder: Bär, Michael, 85049 Ingolstadt (DE)
(74) Vertreter: Thielmann, Frank

(57) **Zusammenfassung**

Die Erfindung betrifft eine Informationseinrichtung für ein Kraftfahrzeug mit einer Übersetzungshilfe in einem Navigationssystem, das einen Text eines ersten Schriftsystems in ein zweites Schriftsystem transformieren kann sowie ein Kraftfahrzeug, das ein solche Informationssystem aufweist und ein Verfahren dazu.

## Beschreibung

Die Erfindung betrifft eine Informationseinrichtung nach dem Oberbegriff des unabhängigen Anspruchs 1 sowie ein Kraftfahrzeug nach Anspruch 6 und ein Verfahren zur Information von Insassen eines Kraftfahrzeugs nach dem Oberbegriff des unabhängigen Anspruchs 7.

Kraftfahrzeuge werden immer häufiger mit Navigationssystemen ausgerüstet, mit deren Hilfe das Navigieren des Fahrzeugs erleichtert wird. Moderne Navigationssysteme können indes neben der reinen Darstellung der Richtungsangabe auch Verkehrsschilder in ihren Ausgabeeinheiten, einem Bildschirm, darstellen. Dazu sind die Fahrzeuge mit einer Kamera und die Navigationssysteme mit einer Schild- bzw. Texterkennung ausgerüstet, so dass aktuelle Informationen von einem Fahrbahnrand dem Fahrzeuglenker auf dem Bildschirm zur Verfügung gestellt werden können. Hierdurch kann eine Fahrsicherheit erhöht werden, wenn der Fahrer ein Schild entweder nicht erkannt oder nach einiger Zeit auch vergessen hat. Es bleibt nämlich auf dem Bildschirm darstellbar, solange sich das Fahrzeug im Geltungsbereich des Schildes aufhält.

Ferner sind Navigationssysteme mit einer breiten Palette unterschiedlicher Karten ausgestattet, so dass der Wagen mit dem Navigationssystem nicht nur auf ein einzelnes Land, zumeist sein Heimatland, beschränkt ist. Damit geht jedoch das Problem für einen Fahrer einher, dass er im Ausland, wenn er die dortige Sprache nicht beherrscht, die Straßen- bzw. Verkehrsschilder nicht oder nur eingeschränkt lesen kann. In Ländern, in denen die Sprache ähnlich der Sprache des Heimatlandes des Fahrers ist, können Straßenschilder bzw. der Bedeutung noch abgeleitet werden.

Es besteht aber gerade für die Länder ein erhebliches Problem für den Fahrer, in denen ein anderes Schriftsystem herrscht. So kann beispielsweise ein Westeuropäer einzelne Buchstaben auf Verkehrszeichen noch erkennen, wenn er aber in Richtung Osteuropa fährt und beispielsweise nach Bulgarien oder Griechenland kommt, kann er die dortigen Verkehrszeichen nicht mehr deuten, da er unter Umständen das dortige Alphabet nicht beherrscht.

Es ist deshalb eine Aufgabe der vorliegenden Erfindung, das eingangs genannte Informationssystem eines Kraftfahrzeugs weiterzuentwickeln und einem Fahrer eine Verkehrsleitfunktion in seinem Navigationssystem bereitzustellen, mit der er selbst im Ausland gut und sicher seinen Weg findet.

Eine Vorrichtung zur Lösung der erfinderischen Aufgabe weist die Merkmale des unabhängigen Anspruchs 1 auf. Danach wird eine Informationseinrichtung zur Information wenigstens eines Insassen eines Kraftfahrzeugs vorgeschlagen, das eine Navigationsvorrichtung mit einer Bilderkennungseinheit zur Erkennung eines Straßenschilds aufweist und eine Transformationseinheit, wobei von der Navigationsvorrichtung ein Text oder Symbol eines ersten Schriftsystems auf dem Straßenschild erkennbar und von der Transformationseinheit in ein zweites Schriftsystem transformierbar ist. Gerade bei Straßenschildern in Form eines Verkehrszeichens mit einem Text kann ein Sprach- oder Schriftunkundiger nicht dessen Bedeutung einwandfrei aus dem Zeichen abgeleiten, weshalb das Navigationssystem mit einer Übersetzungshilfe ausgerüstet ist. Dabei bezieht sich der Begriff eines Schriftsystems nicht nur auf eine Schrift wie die lateinische, arabische, chinesische Schrift oder dergleichen, sondern auch auf eine mit diesem Schriftsystem geschriebenen Sprache. Mit der lateinischen Schrift sind unterschiedliche Sprachen schreibbar, wie beispielsweise die deutsche, englische oder französische Sprache. Die für diese Sprachen verwendeten Alphabete sind nicht einheitlich, weshalb auch von dem entsprechenden Grundalphabet abgeleitete Buchstaben der verschiedenen Sprachen in das Schriftsystem eingeschlossen sind.

Nach einer bevorzugten Ausführungsform kann vorgesehen sein, dass das Straßenschild ein Verkehrzeichen ist, das vorzugsweise einen Text oder ein Symbol des ersten Schriftsystems aufweist und der transformierte Text oder das Symbol in der Ausgabeeinheit, insbesondere dem Navigationssystem, darstellbar ist. Die Bilderkennungseinheit ist vor allem darauf ausgelegt, Verkehrszeichen am Straßenrand zu erkennen. Dabei wird der Text oder ein Symbol auf dem Verkehrzeichen identifiziert, welcher bzw. welches dem ersten Schriftsystem zugeordnet werden kann. Der transformierte Text kann dann auf einem Display oder einem Head-up-Display dargestellt werden. Vorteilhaft kann ebenfalls vorgesehen sein, dass der transformierte Text in der Ausgabeeinheit im Bereich des erkannten und in der Ausgabeeinheit dargestellten Straßenzeichens darstellbar ist. Für den Fahrer ist die Verbindung des Textes mit dem Verkehrszeichen entscheidend, so dass einerseits das Verkehrszeichen in der Anzeige dargestellt wird und andererseits die Übersetzung derart präsentiert wird, dass der Betrachter des Displays die Verbindung von erkanntem Verkehrszeichen und übersetztem Text erkennt.

Gemäß einer Weiterbildung kann das erkannte Verkehrszeichen mit dem Text des ersten Schriftsystems als ein Verkehrszeichen darstellbar sein, das einem Symbol oder Verkehrzeichen des zweiten Schriftsystems entspricht. Verkehrszeichen des ersten Schriftsystems als Verkehrszeichen des transformierten Texts darstellbar sein. Nicht nur der Text auf Verkehrszeichen kann für den Fahrer unverständlich sein, sondern auch die allgemeine Bedeutung, da das Verkehrszeichen nicht dem vertrauten Zeichen des Heimatlandes entspricht. Deshalb ist auch eine Angleichung des Zeichens an das äquivalente und bekannte Verkehrszeichen möglich mit gleichzeitiger Darstellung des übersetzen Textes.

Weiterhin ist es nach einem anderen Ausführungsbeispiel möglich, wenn der Text wenigstens ein Zeichen, ein Buchstabe und/oder eine Zahl oder eine Vielzahl von Zeichen, Buchstaben und/oder Zahlen ist. Das heißt, dass der Text ist nicht ausschließlich aus mehreren Buchstaben bzw. Zeichen gebildet, sondern auch nur aus einem Buchstaben, einer Zahl oder Zeichen bestehen kann. Auch mehrere Wörter oder eine Abfolge von einzelnen Buchstaben oder Zeichen sind denkbar.

Weiterhin wird die Erfindung durch ein Kraftfahrzeug gelöst mit den Merkmalen des Anspruch 6. Wenn ein Kraftfahrzeug eine Informationseinrichtung aufweist, mit der eine unbekannte Schrift übersetzt werden kann, ist es für den Fahrer leichter sich in dem Land zu orientieren.

Ferner wird die erfinderische Aufgabe mit den Merkmalen des unabhängigen Anspruchs 7 gelöst. Danach ist ein Verfahren zur Information wenigstens eines Insassen eines Kraftfahrzeugs vorgesehen, wobei von einer Navigationsvorrichtung wenigstens ein Straßenschild erkannt wird, wobei ein Text oder ein Symbol auf dem Straßenschild eines ersten Schriftsystems von der Navigationsvorrichtung erkannt und von einer Transformationseinheit in ein zweites Schriftsystem transformiert wird.

Nach einer bevorzugten Ausführungsform kann die Transformationseinheit eine Online-Abfrage über einen Zentralspeicher zur Transformation des Textes oder des Symbols. Mit der Online-Abfrage kann die Informationseinrichtung flexibel aktuelle Daten abfragen, wobei grundlegende Informationen in dem internen Speicher des Navigationssystem abgelegt sein können.

Nachfolgend wird ein bevorzugtes Ausführungsbeispiel anhand der Zeichnung näher erläutert. Darin zeigt die einzige Figur eine Schemazeichnung der Erfindung nach dem Ausführungsbeispiel.

Eine Informationseinrichtung nach dem erfinderischen Ausführungsbeispiel ist in ein Kraftfahrzeug integriert, das ein Navigationssystem bzw. - vorrichtung 15 aufweist. Der Navigationsvorrichtung 15 zugeordnet ist eine Bilderkennungeinheit, so dass Straßenzeichen und Verkehrszeichen bzw. - schilder von der Informationseinrichtung erkannt und in das System eingelesen werden können. Eine solche Zusatzfunktion eines Navigationssystems 15 ist als solches bekannt, weshalb hier nicht gesondert auf deren Funktionsweise eingegangen wird. Es ist dem Fachmann geläufig, dass hierfür eine Kamera 10 eingesetzt wird, die einen Bereich vor dem Fahrzeug erfasst.

Die Kamera 10 des Ausführungsbeispiels erfasst mittels einer Videoerfassung die Fahrzeugumgebung, wobei in einem nächsten Schritt Objekte in den aufgenommenen Bildern segmentiert werden. Wird dabei festgestellt, dass ein Verkehrszeichen oder Straßenzeichen bzw. allgemein ein Straßenschild von der Kamera 10 erfasst wurde, wird in einem weiteren Schritt eine Texterkennung durchgeführt, indem nämlich einerseits bestimmt wird, ob ein Text in dem Schild integriert ist, und andererseits, was die semantische Aussage des Textes ist.

Für die Aussage des Textes wird erst einmal eine Schriftzeichenerkennung 12 durchgeführt, indem festgestellt wird, um welchen Schrifttyp es sich bei dem Text in dem Verkehrszeichen handelt. Diese Bestimmung kann auch voreingestellt werden, in dem nämlich der Fahrer manuell den Schrifttyp bzw. die Sprache für das Land einstellt, in dem sich das Fahrzeug gerade befindet. Bei einer Voreinstellung muss die Informationseinrichtung dann nicht mehr den Schritt der Schriftzeichenerkennung 12 durchführen, denn eine Recheneinheit ist dabei auf die entsprechenden Schriftzeichen programmiert.

Bei der Schriftzeichenerkennung 12 wird von der Recheneinheit der Navigationsvorrichtung festgestellt, ob es sich bei den auf dem Verkehrsschild angebrachten Schriftzeichen um beispielsweise lateinische, kyrillische, griechische, hebräische, arabische Schriftzeichen handelt. Es sind darüber hinaus auch japanische, chinesische oder koreanische Schriftzeichen von der Recheneinheit sowie Schriftzeichen von dem indischen Subkontinent und viele andere Schriftzeichen erkennbar. Die Informationseinrichtung ist auf unterschiedliche Schriftsysteme programmiert.

Nach der Schriftzeichenerkennung 12 wird die eigentlich Texterkennung durchgeführt, indem die erkannten Schriftzeichen als Text mit einer Aussage erfasst werden. Sollte der Fahrer mit dem Wagen in seinem Heimatland unterwegs sein, wird der Text beispielsweise auf einer dem Navigationssystem 15 zugeordneten Ausgabeeinheit 14 dargestellt, wobei ein solches Human-Machine-Interface (HMI) in Form eines Bildschirms oder eines Head-up-Displays in dem Wagen integriert ist. Sollte der Fahrer indes nicht in seinem Heimatland unterwegs sein, sondern in einem Land, in dem ein anderes Schriftsystem vorherrscht, stellt die Recheneinheit, wie oben beschrieben, fest, dass andere Schriftzeichen auf den Verkehrsschildern angebracht sind.

Diese Schriftzeichen können von der Recheneinheit in eine für den Fahrer lesbare und verständliche Schrift übersetzt bzw. transformiert werden. Hierzu ist ein Online-Übersetzer 13 vorgesehen, in dem das Navigationssystem 15 den erkannten Text eines erstens Schriftsystems online an einen Zentralrechner übermittelt, der den Text in ein zweites Schriftsystem transformiert, das für den Fahrer verständlich ist. Damit Rechenleistung in dem Navigationssystem eingespart werden kann, wird die Transformation von einer ersten in eine zweite Schrift üblicherweise online über einen zentralen Rechner innerhalb oder außerhalb des Fahrzeugs erfolgen. Die Transformation kann aber auch in der Recheneinheit in dem Navigationssystem 15 erbracht werden, wobei hierfür viele verschiedene Schriftsysteme abgespeichert sind.

Zu der Texterkennung wird auch das Verkehrszeichen von der Recheneinheit erkannt, wobei die aufgenommenen Verkehrszeichen mit einem Symbolspeicher abgeglichen werden, in dem die Verkehrszeichen unterschiedlicher Länder abgespeichert sind. Mit der Verkehrszeichenerkennung 11 kann die Übersetzung bzw. Transformation des erkannten Textes gegebenenfalls abgekürzt oder verifiziert werden. Wenn nämlich beispielsweise durch die Verkehrszeichenerkennung 11 ein Einbahnstraßenschild erkannt wurde, auf dem "Einbahnstraße" als Text angebracht ist, braucht die Texterkennung das Wort "Einbahnstraße" nicht zu transformieren, so dass das Einbahnstraßenverkehrsschild schneller auf der Ausgabeeinheit darstellbar ist.

Die Schildererkennung 11 kann deshalb auch parallel zu oder vor der Texterkennung durchgeführt werden. Die Verkehrszeichenerkennung 11 ist von dem ersten oben beschriebenen Schritt der Erkennung, dass ein Verkehrszeichen vorhanden ist, zu unterscheiden. Erst in einem gesonderten Schritt wird das Verkehrszeichen mit Hilfe des Symbolspeichers erkannt. Eine Verifizierung kann somit mit der Verkehrszeichenerkennung 11 erfolgen, wenn nämlich die Verkehrszeichenerkennung 11 das Verkehrszeichen "Einbahnstraße" bestimmt hat und die Texterkennung den Text "Einbahnstraße" richtig von einem ersten Schriftsystem in ein zweites Schriftsystem transformiert hat.

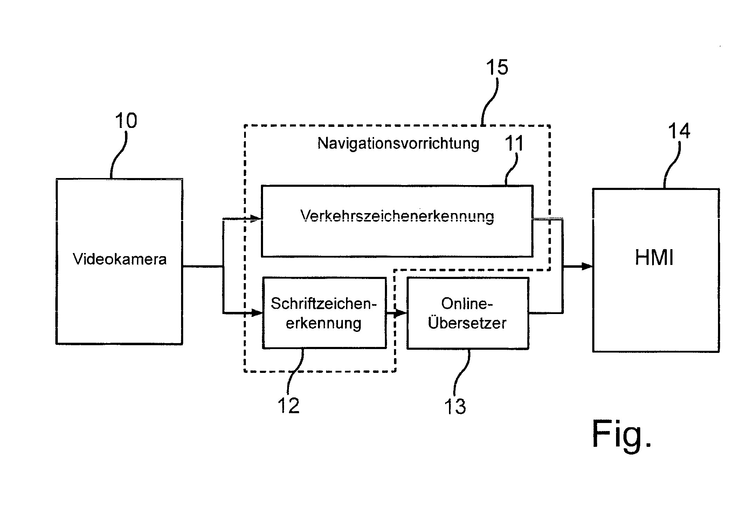

In der Fig. 1 ist eine Prinzipskizze der Erfindung dargestellt, in dem mit einer Videokamera 10 Verkehrszeichen aufgenommen werden und die Verkehrszeichen einer Verkehrszeichenerkennung 11 einerseits und einer Text- bzw. Schriftzeichenerkennung 12 andererseits unterzogen werden. Die Verkehrzeichenerkennung 11 und die Schriftzeichenerkennung 12 sind Teil der Navigationsvorrichtung 15. Die Transformation des Textes bzw. der Schriftzeichen erfolgt online, nämlich beispielsweise durch eine Abfrage in einem Zentralrechner. Der Zentralrechner ist vorzugsweise außerhalb des Fahrzeugs vorgesehen, weshalb die Abfrage über eine Internetverbindung erfolgen kann. Der in der Figur beschriebene Online-Übersetzer 13 ist demnach typischer weise nicht in dem Fahrzeug integriert. Sobald die Navigationsvorrichtung den übersetzen bzw. transformierten Text erhalten hat, wird das Verkehrszeichen mit dem transformierten Text auf einer Anzeigeneinheit (HMI) 14 dargestellt.

## Patentansprüche

1. Informationseinrichtung zur Information wenigstens eines Insassen eines Kraftfahrzeug, das eine Navigationsvorrichtung (15) mit einer Bilderkennungseinheit zur Erkennung eines Straßenschilds aufweist, **gekennzeichnet durch**
eine Transformationseinheit, wobei von der Navigationsvorrichtung (15) ein Text oder Symbol eines ersten Schriftsystems auf dem Straßenschild erkennbar und von der Transformationseinheit in ein zweites Schriftsystem transformierbar ist.

2. Informationseinrichtung nach Anspruch 1,
**dadurch gekennzeichnet, dass**
das Straßenschild ein Verkehrzeichen ist, das vorzugsweise einen Text oder ein Symbol des ersten Schriftsystems aufweist und der transformierte Text oder das Symbol in der Ausgabeeinheit, insbesondere dem Navigationssystem (15), darstellbar ist.

3. Informationseinrichtung nach Anspruch 1 oder 2,
**dadurch gekennzeichnet, dass**
der transformierte Text in der Ausgabeeinheit im Bereich des erkannten und in der Ausgabeeinheit dargestellten Straßenschilds darstellbar ist.

4. Informationseinrichtung nach wenigstens einem der vorstehenden Ansprüche,
**dadurch gekennzeichnet, dass**
das erkannte Straßenschild mit dem Text oder Symbol des ersten Schriftsystems als ein Verkehrszeichen darstellbar ist, das einem Verkehrzeichen des zweiten Schriftsystems entspricht.

5. Informationseinrichtung nach wenigstens einem der vorstehenden Ansprüche,
**dadurch gekennzeichnet, dass**
der Text wenigstens ein Zeichen, ein Buchstabe und/oder eine Zahl oder ein Vielzahl von Zeichen, Buchstaben und/oder Zahlen ist.

6. Kraftfahrzeug,
**dadurch gekennzeichnet, dass**
eine Informationseinrichtung nach wenigstens einem der vorstehenden Ansprüche 1 bis 5 aufweist.

7. Verfahren zur Information wenigstens eines Insassen eines Kraftfahrzeugs, wobei von einer Navigationsvorrichtung (15) wenigstens ein Straßenschild erkannt wird,
**dadurch gekennzeichnet, dass**
ein Text oder ein Symbol eines ersten Schriftsystems auf dem Straßenschild von der Navigationsvorrichtung (15) erkannt und von einer Transformationseinheit in ein zweites Schriftsystem transformiert wird.

8. Verfahren nach Anspruch 7, **dadurch gekennzeichnet, dass** die Transformationseinheit eine Online-Abfrage über einen Zentralspeicher zur Transformation des Textes oder des Symbols durchführt.
